# EUROPÄISCHE PATENTANMELDUNG

(11) **EP 0 683 619 A2**
(43) Veröffentlichungstag der Anmeldung: **22.11.1995**
(21) Anmeldenummer: 95106942.6
(22) Anmeldetag: 08.05.1995
(51) Int. Cl.: H04Q 11/04

(54) **Verfahren und Anordnung zum Umleiten eines Nachrichtenzellenstromes auf einen Ersatzweg**

(30) Priorität: 11.05.1994 DE 4416718
(71) Anmelder: SIEMENS AKTIENGESELLSCHAFT, D-80333 München (DE)
(72) Erfinder: Edmaier, Bernhard, Dipl. Ing., D-82229 Seefeld (DE); Fischer, Wolfgang, Dr. Ing., D-82110 Germering (DE)

(57) **Zusammenfassung**

Innerhalb eines zellenorientierten Kommunikationsnetzes wird für eine solche Umleitung durch eine am Anfang eines Wegepaares liegende Koppeleinrichtung (CCa) ein dieser zugeführter Nachrichtenzellenstrom dupliziert. Die dabei daraus resultierenden Nachrichtenzellenströme werden gesondert über einen aktiven Weg (AP) und über einen diesem zugeordneten Ersatzweg (EP) des Wegepaares einer der am Ende des Wegepaares liegenden Koppeleinrichtung (CCb) zugeführt. In dieser ist eine dezentrale Synchronisiereinrichtung (SY) bzw. sind dezentrale Synchronisiereinrichtungen (SY1, SY2 bzw. SY3, SY4) vorgesehen, in welcher bzw. in welchen zunächst unter Weiterleitung des Nachrichtenzellenstromes des aktiven Weges eine Synchronisierung der beiden Nachrichtenzellenströme erfolgt. Nach einer solchen Synchronisierung wird dann lediglich noch der Nachrichtenzellenstrom des Ersatzweges weitergeleitet.

## Beschreibung

Die Erfindung betrifft ein Verfahren und eine Schaltungsanordnung zum Umleiten eines Nachrichtenzellenstromes über einen Ersatzweg gemäß Oberbegriff der Patentansprüche 1, 2, 10 und 11. Ein derartiges Verfahren und eine derartige Schaltungsanordnung sind bereits durch die nicht vorveröffentlichte deutsche Patentanmeldung P 43 31 577.1 vorgeschlagen worden. In dieser Patentanmeldung sind dabei zwei unterschiedliche Verfahren für die Umleitung eines Nachrichtenzellenstromes von einem aktiven Pfad auf einen Ersatzpfad beschrieben. Nach einem ersten dieser Verfahren werden zunächst lediglich die über den aktiven Pfad übertragenen Nachrichtenzellen über einen diesem aktiven Pfad zugehörigen Eingang einer am Ende des Pfadpaares liegenden Koppeleinrichtung weitergeleitet, während die über den Ersatzpfad des jeweiligen Pfadpaares übertragenen Nachrichtenzellen an einem diesem Ersatzpfad zugehörigen Eingang der betreffenden Koppeleinrichtung zunächst verworfen werden. Bei einer Unterbrechung des aktiven Pfades wird der am Ende des Pfadpaares liegenden Koppeleinrichtung ein Unterbrechungssignal zugeführt, auf dessen Auftreten hin der dem Ersatzpfad zugehörige Eingang und der dem aktiven Pfad zugehörige Eingang der betreffenden Koppeleinrichtung durch ein internes Steuersignal derart gesteuert werden, daß im folgenden die über den Ersatzpfad übertragenen Nachrichtenzellen weitergeleitet, die über den aktiven Pfad übertragenen Nachrichtenzellen dagegen verworfen werden.

Nach dem zweiten Verfahren werden die über den aktiven Pfad und den Ersatzpfad übertragenen Nachrichtenzellen bis zu dem für das Pfadpaar in Frage kommenden Ausgang der am Ende des Pfadpaares liegenden Koppeleinrichtung weitergeleitet. An dem betreffenden Ausgang wird dabei kontinuierlich die Anzahl der über den aktiven Pfad und den Ersatzpfad eintreffenden Nachrichtenzellen gesondert erfaßt. Bei Vorliegen einer Anzahl von über den Ersatzpfad eintreffenden Nachrichtenzellen, die um einen festgelegten Wert oberhalb der Anzahl der über den aktiven Pfad eintreffenden Nachrichtenzellen liegt, werden die über den Ersatzpfad eintreffenden Nachrichtenzellen weitergeleitet, wahrend die über den aktiven Pfad eintreffenden Nachrichtenzellen verworfen werden.

Darüber hinaus ist bereits durch Ohta, H., Ueda, H.: "Hitless Line Protection Switching Method for ATM-Networks", IEEE International Conference on Communications ICC'93, Seiten 272 bis 276, bekannt, am Ausgang einer am Anfang eines Leitungspaares liegenden Koppeleinrichtung sowie am Eingang einer am Ende des Leitungspaares liegenden Koppeleinrichtung jeweils eine gesonderte Steuereinrichtung vorzusehen. Durch die an dem betreffenden Ausgang liegende Steuereinrichtung wird dabei ein zu übertragender Nachrichtenzellenstrom dupliziert, um über das Leitungspaar zwei identische Nachrichtenzellenströme zu der am Ende des Leitungspaares liegenden, aus zwei leitungsindividuellen Puffern gebildeten Steuereinrichtung zu übertragen. Durch letztere erfolgt eine Synchronisierung der beiden zugeführten Nachrichtenzellenströme sowie eine Weiterleitung des über eine als Ersatzweg festgelegte Leitung des Leitungspaares übertragenen Nachrichtenzellenstromes nach erfolgter Synchronisierung. Für diese sind drei unterschiedliche Verfahren beschrieben. Eines dieser Verfahren läuft auf einen bitweisen Vergleich der über das Leitungspaar übertragenen Nachrichtenzellen hinaus. Bei einem weiteren Verfahren werden identische Steuerzellen (OAM-Zellen) in die beiden Nachrichtenzellenströme eingefügt, wobei das Auftreten der Steuerzellen in den beiden Puffern gesondert überwacht wird. Bei Auftreten einer Steuerzelle in dem voreilenden, zunächst über einen Selektor weitergeleiteten Nachrichtenzellenstrom führt dabei zu einer Unterbrechung dieser Weiterleitung. Der Selektor wird dann mit dem Auftreten einer Steuerzelle in dem nacheilenden Nachrichtenzellenstrom umgesteuert, so daß von diesem Zeitpunkt an lediglich dieser Nachrichtenzellenstrom weitergeleitet wird. Bei dem verbleibenden Verfahren werden schließlich die Steuerzellen periodisch in die beiden Nachrichtenzellenströme eingefügt. Dabei wird durch das Auftreten der Steuerzellen in dem nacheilenden Nachrichtenzellenstrom lediglich die Weiterleitung der Nachrichtenzellen ohne Umschalten des Selektors getriggert. Nähere Angaben bezüglich der verwendeten Steuerzellen und deren Auswertung in den leitungsindividuellen Puffern sind jedoch der genannten Druckschrift nicht zu entnehmen.

Es ist nun Aufgabe der vorliegenden Erfindung, einen Weg zu zeigen, wie ein Verfahren und eine Schaltungsanordnung gemäß Oberbegriff der Patentansprüche 1, 2, 10 und 11 ausgebildet werden können, um eine störungsfreie Umleitung eines Nachrichtenzellenstromes von einem aktiven Weg auf einen Ersatzweg durchführen zu können.

Gelöst wird die Aufgabe bei einem Verfahren gemäß Oberbegriff der Patentansprüche 1 und 2 durch die in diesen Patentansprüchen angegebenen Verfahrensmerkmale. Die Erfindung bringt dabei den Vorteil mit sich, daß mit einem relativ geringen steuerungstechnischen Aufwand eine pfadindividuelle bzw. verbindungsindividuelle Umleitung eines Nachrichtenzellenstromes von einem aktiven Weg auf einen Ersatzweg durchgeführt werden kann. Insbesondere ist durch die Übertragung von fortlaufend sich ändernden Folgenummern in festgelegten Steuerzellen und durch die Auswertung dieser Folgenummern eine störungsfreie Umleitung gewährleistet.

Zweckmäßige Ausgestaltungen des Verfahrens gemäß der vorliegenden Erfindung ergeben sich aus den Patentansprüchen 2 bis 9.

Die vorstehend aufgezeigte Aufgabe wird bei einer Schaltungsanordnung gemäß Oberbegriff der Patentansprüche 10 und 11 durch die in diesen Patentansprüchen angegebenen schaltungstechnischen Merkmale gelöst. Der Vorteil der erfindungsgemäßen Schaltungsanordnung sowie der aus den Patentansprüchen 12 bis 16 hervorgehenden Ausgestaltungen besteht dabei in dem geringen schaltungstechnischen Aufwand für eine störungsfreie Umleitung eines Nachrichtenzellenstromes von einem aktiven Weg auf einen Ersatzweg.

Im folgenden wird die vorliegende Erfindung anhand von Zeichnungen beispielsweise näher erläutert.
- FIG 1: zeigt in einem Blockschaltbild ausschnittweise ein zellenorientiertes Kommunikationsnetz, bei welchem die vorliegende Erfindung angewandt ist,
- FIG 2: zeigt ein erstes Ausführungsbeispiel der Erfindung,
- FIG 3: zeigt ausschnittweise einen möglichen Aufbau einer in FIG 2 schematisch dargestellten ausgangsseitigen Schnittstelleneinrichtung,
- FIG 4: zeigt ein zweites Ausführungsbeispiel der Erfindung,
- FIG 5: zeigt ausschnittweise einen möglichen Aufbau zweier in FIG 4 schematisch dargestellten eingangsseitigen Schnittstelleneinrichtungen,
- FIG 6: zeigt ein drittes Ausführungsbeispiel der Erfindung und
- FIG 7: zeigt einen möglichen Aufbau zweier in FIG 6 schematisch dargestellten eingangsseitigen Schnittstelleneinrichtungen.

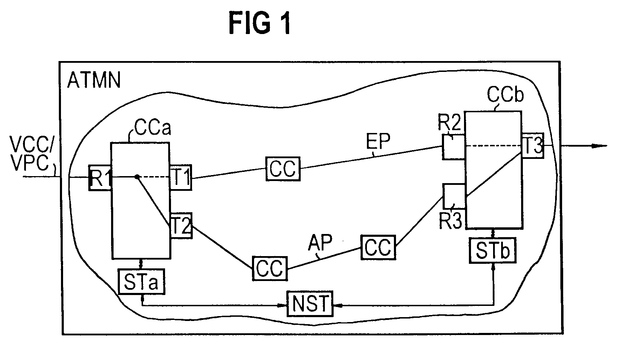

In FIG 1 ist ausschnittweise ein als Beispiel für ein zellenorientiertes Kommunikationsnetz dienendes, nach einem asynchronen Transfer-Modus ("Asynchronous Transfer Mode") arbeitendes ATM-Kommunikationsnetz ATMN dargestellt, welches aus einer Vielzahl von Koppeleinrichtungen gebildet sein möge. Innerhalb dieses ATM-Kommunikationsnetzes werden in gleicher Richtung verlaufende, in bekannter Weise eingerichtete virtuelle Verbindungen beispielsweise über sogenannte virtuelle Pfade geführt, d.h. diese virtuellen Pfade führen jeweils eine Mehrzahl von virtuellen Verbindungen. Die Koppeleinrichtungen mögen dabei als sogenannte "Cross Connects" ausgebildet sein, über welche virtuelle Pfade fest eingerichtet werden und über längere Zeit bestehen bleiben. Diese Koppeleinrichtungen können jedoch auch aus Vermittlungseinrichtungen bestehen, über welche virtuelle Pfade im Zuge eines entsprechenden Verbindungaufbaus wahlweise eingerichtet werden können. Da ein solcher virtueller Pfad beispielsweise bis zu 65536 virtuelle Verbindungen enthalten und außerdem eine hohe Summenbitrate von beispielsweise bis zu 2,4 Gbyte/s aufweisen kann, muß ein solcher virtueller Pfad im Bedarfsfalle möglichst schnell auf einen Ersatzweg störungsfrei umgeschaltet werden, d.h. ohne Zellenverlust, ohne Duplizierung von Zellen, ohne Informationsverfälschungen in den einzelnen Zellen und unter Einhaltung der Zellenreihenfolge. Dafür wird innerhalb des ATM-Kommunikationsnetzes für jeden Pfad, im folgenden als aktiver Pfad bezeichnet, ein Ersatzpfad festgelegt. Der jeweilige aktive Pfad und der zugehörige Ersatzpfad werden im folgenden als Pfadpaar bezeichnet und verlaufen über getrennte Wege. Es sei hier bereits darauf hingewiesen, daß zwar nachfolgend die vorliegende Erfindung anhand von innerhalb des ATM-Kommunikationsnetzes eingerichteten virtuellen Pfaden erläutert wird, die Erfindung jedoch auch auf einzelne virtuelle Verbindungen bzw. Pfadgruppen anwendbar ist, die jeweils über ein aus einem aktiven Weg und einem Ersatzweg gebildetes Wegepaar verlaufen können.

In FIG 1 ist stellvertretend für eine Vielzahl von innerhalb des ATM-Kommunikationsnetzes ATMN verlaufenden virtuellen Pfadpaaren ein zwischen zwei Koppeleinrichtungen einrichtbares virtuelles Pfadpaar schematisch dargestellt. Diese Koppeleinrichtungen sind dabei mit CCa und CCb bezeichnet. Die Koppeleinrichtung CCa stellt den Anfang des virtuellen Pfadpaares dar und erhält an einer Schnittstelleneinrichtung R1 die innerhalb eines Zubringerpfades VPC auftretenden Nachrichtenzellen zugeführt. Der mit AP bezeichnete aktive Pfad verläuft von der Koppeleinrichtung CCa aus über eine mit dieser verbundene Schnittstelleneinrichtung T2 sowie zwei mit CC bezeichnete Zwischenkoppeleinrichtungen zu einer mit R3 bezeichneten Schnittstelleneinrichtung der Koppeleinrichtung CCb. Der zugehörige Ersatzpfad EP verläuft dagegen über eine der Koppeleinrichtung CCa zugehörige Schnittstelleneinrichtung T1 und eine Zwischenkoppeleinrichtung CC zu einer Schnittstelleneinrichtung R2 der Koppeleinrichtung CCb. Im Normalfall mögen dabei Nachrichtenzellen lediglich über den aktiven Pfad AP an eine einen Ausgang der Koppeleinrichtung CCb darstellende Schnittstelleneinrichtung T3 weitergeleitet werden. Lediglich unter der Steuerung einer Netz-Steuereinrichtung NST, welche mit einer der Koppeleinrichtung CCa zugeordneten Steuereinrichtung STa und mit einer der Koppeleinrichtung CCb zugeordneten Steuereinrichtung STb verbunden ist, wird, wie im folgenden noch näher dargelegt, von dem aktiven Pfad AP auf den zugehörigen Ersatzpfad EP umgeschaltet, d.h. nach der Umschaltung werden die über diesen Ersatzpfad eintreffenden Nachrichtenzellen an die Schnittstelleneinrichtung T3 weitergeleitet.

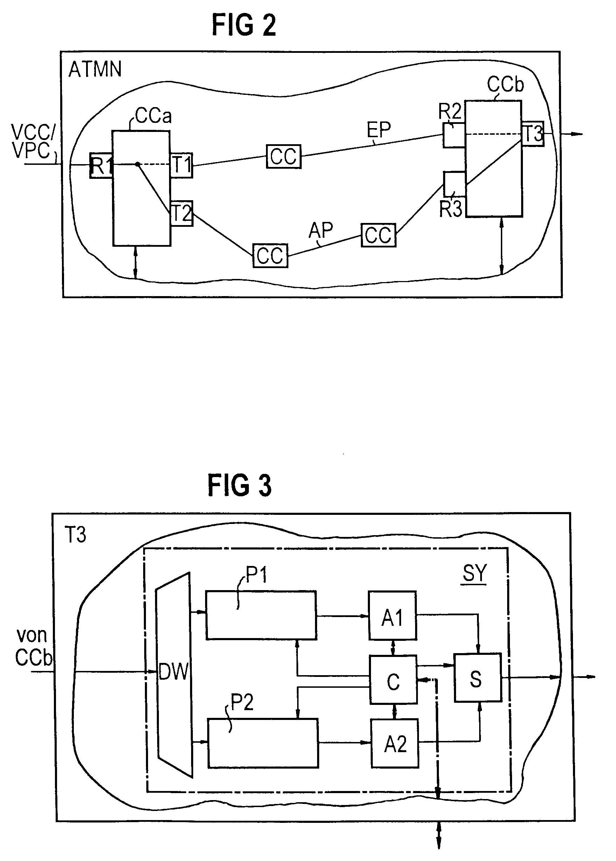

Im übrigen kann der Ersatzpfad EP je nach der Auslegung des ATM-Kommunikationsnetzes entweder erst auf die genannte Ansteuerung hin nach Maßgabe der Netzauslastung und der geforderten Übertragungskapazität festgelegt werden oder bereits hinsichtlich des Weges festgelegt sein, wobei dann bei letzterem für den Ersatzpfad erst auf eine Ansteuerung hin eine der Übertragungskapazität des aktiven Pfades entsprechende Übertragungskapazität angefordert wird. Dabei kann die angeforderte Übertragungskapazität bis zu einem entsprechenden Anstoß für einen niederprioren Nachrichtenverkehr benutzt werden. Anhand der FIGUREN 2 bis 7 werden nachfolgend drei Ausführungsbeispiele für ein Verfahren zum Umschalten von dem aktiven Pfad AP auf den Ersatzpfad EP näher beschrieben.

Bei einem ersten, in FIG 2 dargestellten Ausführungsbeispiel erfolgt die Umschaltung von dem aktiven Pfad AP auf den Ersatzpfad EP mit Hilfe einer in der Schnittstelleneinrichtung T3 vorhandenen, dem aktiven Pfad zumindest temporär zugeordneten Synchronisiereinrichtung, deren möglicher Aufbau in FIG 3 näher dargestellt ist. Dabei wird davon ausgegangen, daß zunächst über den Zubringerpfad VPC eintreffende Nachrichtenzellen ausschließlich von der Schnittstelleneinrichtung R1 der Koppeleinrichtung CCa her über den aktiven Pfad AP zu der Schnittstelleneinrichtung T3 der Koppeleinrichtung CCb hin übertragen werden. Die Nachrichtenzellen mögen dafür innerhalb der Koppeleinrichtungen CCa und CCb beispielsweise nach dem sogenannten "Self-Routing"-Prinzip weitergeleitet werden, indem jeder Nachrichtenzelle nach Maßgabe des in dieser jeweils vorhandenen externen Zellenkopfes ("Header") bei Eintritt in die jeweilige Koppeleinrichtung ein interner "Self-Routing"-Zellenkopf vorangestellt wird. Dieser interne Zellenkopf wird im Zuge des Einrichtens des virtuellen Pfades beispielsweise durch die der jeweiligen Koppeleinrichtung zugeordnete Steuereinrichtung STa bzw. STb bereitgestellt und enthalt sämtliche Wegeinformationen für die Weiterleitung der zu dem virtuellen Pfad gehörenden Nachrichtenzellen innerhalb der jeweiligen Koppeleinrichtung. Im Falle der Koppeleinrichtung CCa sind das Informationen für die Übertragung von Nachrichtenzellen zwischen der Schnittstelleneinrichtung R1 und der Schnittstelleneinrichtung T2. Dagegen enthält der in der Koppeleinrichtung CCb für den virtuellen Pfad bereitgestellte interne Zellenkopf Informationen für die Übertragung von Nachrichtenzellen von der Schnittstelleneinrichtung R3 zu der Schnittstelleneinrichtung T3. Der jeweilige interne Zellenkopf ist dabei in der Schnittstelleneinrichtung R1 bzw. R3 und in den entsprechenden Schnittstelleneinrichtungen der übrigen in den virtuellen Pfad einbezogenen Koppeleinrichtungen des Kommunikationsnetzes ATMN gespeichert.

Im übrigen kann anstelle des "Self-Routing"-Prinzips auch alternativ das sogenannte Umwerteprinzip für die Weiterleitung von Nachrichtenzellen innerhalb der jeweiligen Koppeleinrichtung benutzt sein, nach welchem lediglich der der jeweiligen Nachrichtenzelle zugehörige externe Zellenkopf modifiziert wird.

Auf ein Umsteuersignal, welches z.B. von der zentralen Netz-Steuereinrichtung NST her z.B. in Form wenigstens einer Steuerzelle ("Operation, Administration and Maintenance"-Zelle), im folgenden als OAM-Zelle bezeichnet, der Steuereinrichtung einer der Koppeleinrichtungen CCa und CCb zugeführt ist, wird eine Umschaltung des virtuellen Pfades AP auf den Ersatzpfad EP eingeleitet. Bei der ein solches Umsteuersignal empfangenden Steuereinrichtung möge es sich dabei beispielsweise um die der Koppeleinrichtung CCb zugeordnete Steuereinrichtung STb handeln. Diese Steuereinrichtung stellt daraufhin in der Schnittstelleneinrichtung R2 einen internen Zellenkopf bereit, der Wegeinformationen enthält, um die den betreffenden Ersatzpfad EP zugehörigen Nachrichtenzellen von dieser Schnittstelleneinrichtung her der Schnittstelleneinrichtung T3 zuzuführen. Zusätzlich wird auf dieses Anforderungssignal hin eine in der Schnittstelleneinrichtung T3 vorhandene, im folgenden noch näher erläuterte Synchronisiereinrichtung aktiviert. Anschließend wird entweder von dieser Schnittstelleneinrichtung T3 oder der zugehörigen Steuereinrichtung STb her ein Steuersignal in Form wenigstens einer das Aktivieren der Synchronisiereinrichtung anzeigenden OAM-Zelle zu der Steuereinrichtung STa der Koppeleinrichtung CCa hin übertragen. Dafür kann beispielsweise ein zwischen den beiden Koppeleinrichtungen CCb und CCa eingerichteter virtueller Steuerkanal benutzt werden, der beispielsweise in einem dem aktiven Pfad AP zugeordneten, jedoch in Gegenrichtung verlaufenden Pfad eingerichtet ist. Auf das Auftreten einer solchen OAM-Zelle hin wird durch die Steuereinrichtung STa der bisher in der Schnittstelleneinrichtung R1 für den virtuellen Pfad AP gespeicherte interne Zellenkopf derart modifiziert, daß nachfolgende Nachrichtenzellen des virtuellen Pfades dupliziert und die daraus resultierenden, einander zugeordneten Nachrichtenzellen gesondert über den aktiven Pfad AP und den zugehörigen Ersatzpfad EP übertragen werden. Damit erhält die Schnittstelleneinrichtung T3 sowohl über den aktiven Pfad AP als auch über den Ersatzpfad EP jeweils einen Nachrichtenzellenstrom zugeführt. Dabei wird jedoch zunächst in einer nunmehr durch die bereits erwähnte Synchronisiereinrichtung eingeleiteten Synchronisierphase lediglich der über den aktiven Pfad AP zugeführte Nachrichtenzellenstrom weitergeleitet. Während der Synchronisierphase, auf die im folgenden noch näher eingegangen wird, werden jedoch die über den aktiven Pfad AP und den Ersatzpfad EP eintreffenden Nachrichtenzellenströme synchronisiert, indem die auf diesen Pfaden auftretenden unterschiedlichen Verzögerungszeiten ausgeglichen werden. Tritt dabei auf dem aktiven Pfad eine geringere Verzögerungszeit auf als auf dem Ersatzpfad, so werden die über den aktiven Pfad übertragenen Nachrichtenzellen verzögert, um einen Gleichlauf mit den Nachrichtenzellen auf dem Ersatzpfad zu erreichen. Erfahren dagegen die Nachrichtenzellen auf dem Ersatzpfad eine geringere Verzögerung als die zugehörigen Nachrichtenzellen auf dem aktiven Pfad, so werden die über den Ersatzpfad übertragenen Nachrichtenzellen entsprechend verzögert.

Bei einem dadurch erreichten Gleichlauf wird dann auf den Ersatzpfad umgeschaltet, d.h. von diesem Zeitpunkt an werden dann lediglich noch die über den Ersatzpfad eintreffenden Nachrichtenzellen über die Schnittstelleneinrichtung T3 weitergeleitet. Die damit abgeschlossene Umschaltung wird beispielsweise der der Koppeleinrichtung CCb zugehörigen Steuereinrichtung durch eine entsprechende OAM-Zelle angezeigt. Darüber hinaus wird der Steuereinrichtung STa der Koppeleinrichtung CCa über den zuvor genannten Steuerkanal ein Steuersignal z.B. in Form wenigstens einer die Umschaltung auf den Ersatzpfad anzeigenden OAM-Zelle zugeführt, woraufhin unter der Steuerung der Steuereinrichtung STa der in der Schnittstelleneinrichtung R1 bisher gespeicherte interne Zellenkopf derart modifiziert wird, daß nachfolgend Nachrichtenzellen lediglich noch über den Ersatzpfad EP weitergeleitet werden.

Vorstehend wurde davon ausgegangen, daß das erwähnte Umsteuersignal (OAM-Zelle bzw. OAM-Zellen) der Steuereinrichtung STb von der Netz-Steuereinrichtung NST her zugeführt worden ist. Alternativ dazu kann diese OAM-Zelle bzw. können diese OAM-Zellen auch der Steuereinrichtung STa der Koppeleinrichtung CCa zugeführt sein. In diesem Falle wird zunächst von der Steuereinrichtung STa aus beispielsweise über den aktiven Pfad AP eine festgelegte OAM-Zelle zu der Steuereinrichtung STb hin übertragen, auf welche in der Steuereinrichtung STb und nachfolgend in der Steuereinrichtung STa die zuvor erläuterten Steuerungsvorgänge ablaufen. Das heißt, die zeitweise Übertragung von Nachrichtenzellen von der Koppeleinrichtung CCa her sowohl über den aktiven Pfad AP als auch über den Ersatzpfad EP und die anschließende ausschließliche Übertragung von Nachrichtenzellen über den Ersatzpfad erfolgen erst dann, nachdem von der Koppeleinrichtung CCb eine das Vorliegen eines Umsteuersignals anzeigende OAM-Zelle abgegeben wurde.

Anhand der FIG 3 wird nun auf das zuvor bereits erwähnte Synchronisierverfahren sowie auf einen möglichen Aufbau der zuvor bereits erwähnten, in der Schnittstelleneinrichtung T3 vorhandenen Synchronisiereinrichtung näher eingegangen. Dabei sind für diese Synchronisiereinrichtung lediglich die zum Verständnis der vorliegenden Erfindung relevanten Schaltungsteile aufgeführt. Danach weist die mit SY bezeichnete Synchronisiereinrichtung eingangsseitig eine Datenweiche DW auf, welcher von der Koppeleinrichtung CCb her zunächst der über den aktiven Pfad AP auftretende Nachrichtenzellenstrom und anschließend während der Synchronisierphase im Multiplexbetrieb zusätzlich der über den Ersatzpfad EP auftretende Nachrichtenzellenstrom zugeführt ist. In dem jeweiligen Nachrichtenzellenstrom ist dabei, beispielsweise durch die Koppeleinrichtung CCa, in festgelegten Zeitabständen jeweils eine besonders gekennzeichnete OAM-Zelle eingefügt. Diese OAM-Zellen weisen jeweils eine von OAM-Zelle zu OAM-Zelle sich fortlaufend verändernde Folgenummer auf. Beim vorliegenden Ausführungsbeispiel ist nach jeweils 256 Nachrichtenzellen jeweils eine OAM-Zelle unter Verzögern des jeweiligen Nachrichtenzellenstromes eingefügt und die jeweilige Folgenummer durch 8 Bit codiert. Alternativ dazu kann durch eine solche OAM-Zelle auch eine in dem jeweiligen Nachrichtenzellenstrom enthaltene, auf die festgelegte Anzahl von Nachrichtenzellen folgende Leerzelle ersetzt werden. Tritt eine derartige Leerzelle dabei nicht innerhalb einer festgesetzten Zeit, beispielsweise einer durch 128 Zellen festgelegten Zeit auf, so wird eine OAM-Zelle gezielt in den Nachrichtenzellenstrom eingefügt, und zwar unter Verzögern des Nachrichtenzellenstromes um 1 Zelle. Bei dieser Vorgehensweise sollten jedoch die festgelegten Zeitabstände für das Einfügen von OAM-Zellen im Mittel eingehalten werden.

Der Nachrichtenzellenstrom des aktiven Pfades AP durchläuft von der Datenweiche DW aus einen Pufferspeicher P1, während der Nachrichtenzellenstrom des Ersatzpfades EP einem Pufferspeicher P2 zugeführt ist. Jedem dieser Pufferspeicher ist eine gesonderte Auswerteeinrichtung A1 bzw. A2 nachgeschaltet, wobei diese Auswerteeinrichtungen gemeinsam mit einer Steuereinrichtung C in Verbindung stehen. Diese ist mit einem Steuereingang einer den Ausgang der Synchronisiereinrichtung SY darstellenden Schalteinrichtung S verbunden, die eingangsseitig zusätzlich mit Ausgängen der Auswerteeinrichtungen A1 und A2 in Verbindung steht. Diese Schalteinrichtung ist dabei durch die Steuereinrichtung C derart gesteuert, daß zunächst von den die Pufferspeicher P1 und P2 durchlaufenden Nachrichtenzellen lediglich die über den aktiven Pfad AP eintreffenden Nachrichtenzellen weitergeleitet werden. Dabei wird jedoch auf das Auftreten des zuvor genannten Umsteuersignals das Auftreten von OAM-Zellen durch die jeweilige Auswerteeinrichtung A1 bzw. A2 ständig überwacht und die jeweilige OAM-Zelle der Steuereinrichtung C zugeführt. Anhand der in den OAM-Zellen jeweils geführten Folgenummer ermittelt diese zunächst, welcher der beiden Nachrichtenzellenströme der voreilende ist. Nachfolgende Nachrichtenzellen des voreilenden Nachrichtenzellenstromes werden dann unter der Steuerung der Steuereinrichtung C in dem jeweiligen Pufferspeicher (P1 bzw. P2) vor einer Weiterleitung zwischengespeichert, bis in dem nacheilenden Nachrichtenzellenstrom eine Folgenummer auftritt, die der für den voreilenden Nachrichtenzellenstrom gerade ermittelten Folgenummer entspricht. Bei Gleichheit dieser Folgenummern, d.h. bei einem erreichten Gleichlauf der beiden Nachrichtenzellenströme, wird dann die Schalteinrichtung S von der Steuereinrichtung C derart gesteuert, daß lediglich noch die über den Ersatzpfad eintreffenden Nachrichtenzellen weitergeleitet werden.

Bei vorliegendem Ausführungsbeispiel besteht dabei auch die Möglichkeit, für den Fall, daß der über den aktiven Pfad übertragene Nachrichtenzellenstrom der voreilende ist, anstelle einer gerade erläuterten abrupten Verzögerung eine graduelle Verzögerung durchzuführen, indem dieser Nachrichtenzellenstrom beim Durchlauf des Pufferspeichers P1 schrittweise unter der Steuerung der Steuereinrichtung C verzögert wird, bis in der Steuereinrichtung C gleichzeitig zwei gleiche Folgenummern vorliegen. In entsprechender Weise kann eine zunächst für den Ersatzpfad zu realisierende Verzögerung graduell nach erfolgter Umschaltung wieder abgebaut werden. Diese graduelle Veränderung der Verzögerung bringt dabei den Vorteil mit sich, daß Verzögerungszeitschwankungen innerhalb tolerierbarer Grenzwerte gehalten werden können. Dies ist insbesondere dann von Bedeutung, wenn innerhalb des umzuschaltenden virtuellen Pfades Audio-, Video- oder Multimedia-Verbindungen verlaufen, die garantierte minimale Verzögerungszeitschwankungen erfordern. Außerdem wird durch eine solche graduelle Änderung die durch die Weiterleitung von Nachrichtenzellen verursachte Burst-Größe beschränkt.

Vorstehend wurde lediglich als Beispiel der Fall betrachtet, daß ein einziger aktiver Pfad mit Hilfe der in FIG 3 dargestellten Synchronisiereinrichtung SY auf einen zugeordneten Ersatzpfad umgeschaltet werden kann. Eine solche Synchronisiereinrichtung kann auch im Multiplexbetrieb einer Mehrzahl von virtuellen Pfaden zugeordnet sein, wenn diese sequentiell auf einen diesen jeweils zugeordneten Ersatzpfad umzuschalten sind. Bei einer geforderten simultanen Umschaltung von virtuellen Pfaden kann eine der Anzahl der simultan umzuschaltenden virtuellen Pfade entsprechende Anzahl von Synchronisiereinrichtungen vorgesehen sein.

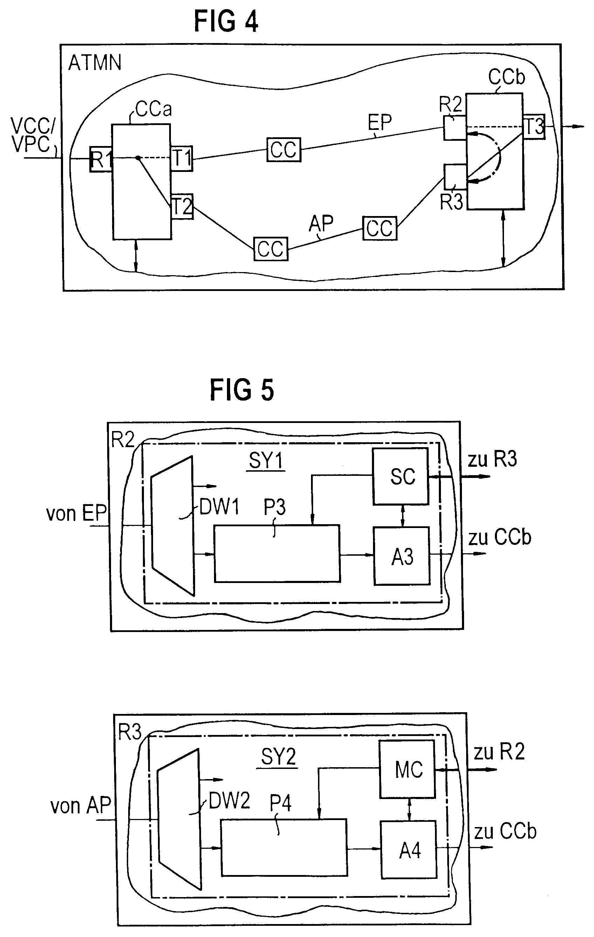

In den FIG 4 und 5 ist ein weiteres Ausführungsbeispiel für das Umleiten eines Nachrichtenzellenstromes von dem aktiven Pfad AP auf den Ersatzpfad EP dargestellt. Bei diesem Ausführungsbeispiel laufen auf ein von der Netz-Steuereinrichtung NST (FIG 1) abgegebenes Umsteuersignal hin den zuvor erläuterten Steuerungsvorgängen entsprechende Steuerungsvorgänge in den Koppeleinrichtungen CCa und CCb ab. Ein Unterschied besteht jedoch darin, daß bei diesem zweiten Ausführungsbeispiel die Synchronisierung der beiden über den aktiven Pfad AP und den Ersatzpfad EP übertragenen Nachrichtenzellenströmen in den, der Koppeleinrichtung CCb zugehörigen Schnittstelleneinrichtungen R2 und R3 erfolgt. Wie in FIG 4 angedeutet, wird mit dem Auftreten eines oben erwähnten Umsteuersignals unter der Steuerung der der Koppeleinrichtung CCb zugeordneten Steuereinrichtung STb ein Kommunikationsweg über diese Koppeleinrichtung zwischen zwei in den Schnittstelleneinrichtungen R2 und R3 enthaltenen, dem aktiven Pfad und dem Ersatzpfad zumindest temporär zugeordneten Synchronisiereinrichtungen eingerichtet. In FIG 5 sind diese Synchronisiereinrichtungen ausschnittweise dargestellt, wobei die der Schnittstelleneinrichtung R2 zugehörige Synchronisiereinrichtung mit SY1, die der Schnittstelleneinrichtung R3 zugehörige Synchronisiereinrichtung dagegen mit SY2 bezeichnet ist.

Der der Schnittstelleneinrichtung R3 zugeführte Nachrichtenzellenstrom des aktiven Pfades AP durchläuft nach dieser FIG 5 von einer Datenweiche DW2 aus einen Pufferspeicher P4, welchem eine Auswerteeinrichtung A4 nachgeschaltet ist. Diese steht einerseits mit einer Steuereinrichtung MC, die eine noch zu erläuternde Master-Funktion übernimmt, und andererseits mit dem Koppelnetzwerk der Koppeleinrichtung CCb in Verbindung. In entsprechender Weise weist die der Schnittstelleneinrichtung R2 zugehörige Synchronisiereinrichtung SY1 eine Datenweiche DW1, einen Pufferspeicher P3, eine Auswerteeinrichtung A3 sowie eine mit SC bezeichnete Steuereinrichtung auf, wobei letztere im Gegensatz zu der der Synchronisiereinrichtung SY2 zugehörigen Steuereinrichtung eine Slave-Funktion übernimmt.

Bis zum Auftreten eines oben erwähnten Umsteuersignals werden lediglich die der Schnittstelleneinrichtung R3 zugeführten Nachrichtenzellen des aktiven Pfades AP an die in den FIG 1 und 4 dargestellte Schnittstelleneinrichtung T3 weitergeleitet. Die der Schnittstelleneinrichtung R2 zugeführte Nachrichtenzellen des Ersatzpfades EP werden dagegen unter der Steuerung der Steuereinrichtung SC unterdrückt. Auf das Auftreten eines Umsteuersignals hin werden die Steuereinrichtungen MC und SC durch die der Koppeleinrichtung CCb zugeordnete Steuereinrichtung STb derart aktiviert, daß diese unabhängig voneinander die von der zugehörigen Auswerteeinrichtung R1 zugeführten OAM-Zellen hinsichtlich der darin jeweils enthaltenen Folgenummer auswerten. Dabei werden die durch die Steuereinrichtung SC ermittelten Folgenummern der Steuereinrichtung MC über den zuvor erwähnten Kommunikationsweg zugeführt. Diese ermittelt dann zunächst anhand der zugeführten Folgenummern, in welcher der beiden Synchronisiereinrichtungen SY1 und SY2 eine Verzögerung durchzuführen ist. Ist dies die Synchronisiereinrichtung SY2, so wird durch die Steuereinrichtung MC diese Verzögerung von Nachrichtenzellen in der oben angegebenen Weise gesteuert. Nach erfolgter Verzögerung, die auch hier graduell erfolgen kann, erhält dann die Steuereinrichtung SC über den Kommunikationsweg von der Steuereinrichtung MC ein Steuersignal beispielsweise wieder in Form einer OAM-Zelle zugeführt, um dieser anzuzeigen, daß die der Synchronisiereinrichtung SY1 zugeführten Nachrichtenzellen an die Schnittstelleneinrichtung T3 weiterzuleiten sind. Gleichzeitig werden mit der Abgabe dieses Steuersignals die der Synchronisiereinrichtung über den aktiven Pfad AP zugeführte Nachrichtenzellen unter der Steuerung der Steuereinrichtung MC unterdrückt. Andernfalls, d.h. wenn in der Synchronisiereinrichtung SY1 eine Verzögerung durchzuführen ist, erhält die Steuereinrichtung SC von der Steuereinrichtung MC her Steuersignale (OAM-Zellen) mit von dieser empfangenen Folgenummern zugeführt, um durch diese eine entsprechende, gegebenenfalls graduell durchzuführende Verzögerung von Nachrichtenzellen zu steuern. Nach erfolgter Verzögerung werden zwischen den beiden Steuereinrichtungen MC und SC Steuersignale (OAM-Zellen) ausgetauscht, um nachfolgend den der Schnittstelleneinrichtung R2 zugeführten Nachrichtenzellenstrom an die Schnittstelleneinrichtung T3 weiterzuleiten, und zwar unter Unterdrücken des der Schnittstelleneinrichtung R3 zugeführten Nachrichtenzellenstromes. Damit ist dann die geforderte Umleitung des Nachrichtenzellenstromes von dem aktiven Pfad AP auf den Ersatzpfad EP abgeschlossen.

Bezüglich der in der FIG 5 dargestellten Synchronisiereinrichtungen SY1 und SY2 sei noch darauf hingewiesen, daß an die diesen jeweils zugehörige Datenweiche weitere, aus einem Pufferspeicher, einer nachgeschalteten Auswerteeinrichtung und einer Steuereinrichtung bestehende Schaltungselemente anschaltbar sind, um simultan eine Mehrzahl von virtuellen Pfaden auf zugeordnete Ersatzpfade umschalten zu können. Alternativ dazu kann der jeweilige Pufferspeicher (P3, P4) auch als gemeinsamer Pufferspeicher für mehrere virtuelle Pfade ausgebildet sein, so daß auf die zugehörige Datenweiche verzichtet werden kann.

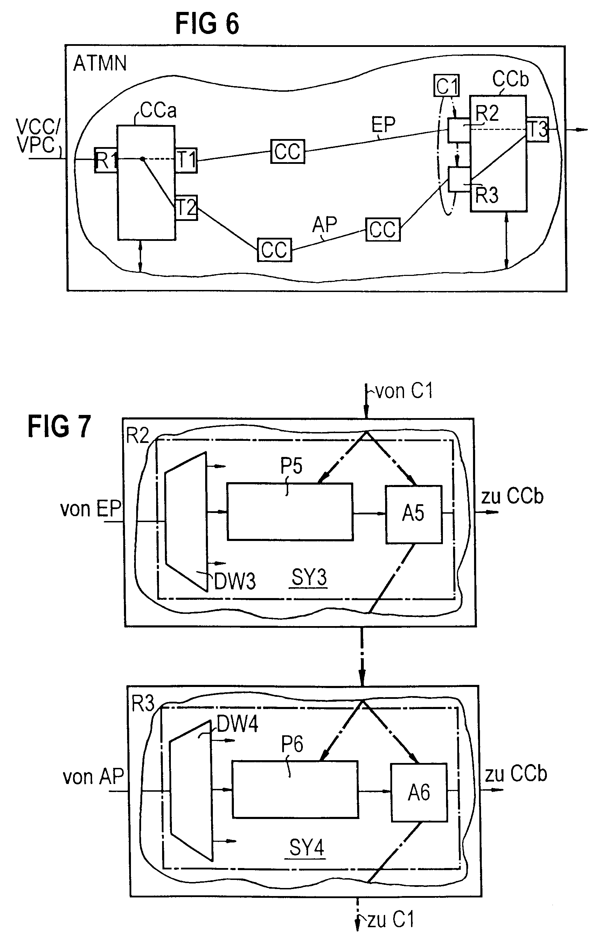

In den FIG 6 und 7 ist schließlich ein drittes Ausführungsbeispiel für das Umleiten eines Nachrichtenzellenstromes von einem aktiven Pfad auf einen Ersatzpfad dargestellt. Bei diesem Ausführungsbeispiel erfolgt wie bei dem anhand der FIG 4 und 5 erläuterten Ausführungsbeispiel die Synchronisierung und die Umschaltung auf den Ersatzpfad nach erfolgter Synchronisierung mit Hilfe von in den Schnittstelleneinrichtungen R2 und R3 vorhandenen, dem aktiven Pfad mit dem Ersatzpfad zumindest temporär zugeordneten Synchronisiereinrichtungen. Die der Schnittstelleneinrichtung R2 zugehörige Synchronisiereinrichtung ist dabei mit SY3 bezeichnet. Dagegen trägt die der Schnittstelleneinrichtung R3 zugehörige Synchronisiereinrichtung die Bezeichnung SY4. Die Synchronisiereinrichtung SY3 verfügt nach FIG 7 über eine für die Aufnahme eines Nachrichtenzellenstromes dienende Datenweiche DW3, an welche ein Pufferspeicher P5 angeschlossen ist. Diesem ist eine Auswerteeinrichtung A5 nachgeschaltet, welche den Ausgang der jeweiligen Synchronisiereinrichtung bildet. In entsprechender Weise enthält die Synchronisiereinrichtung SY4 eine Datenweiche DW4, einen Pufferspeicher P6 und eine diesem nachgeschaltete Auswerteeinrichtung A6. Diese Schaltungsteile entsprechen ihrer Funktion nach den zuvor erläuterten, in FIG 5 mit DW1, DW2, P3, P4, A3 und A4 bezeichneten Schaltungselementen. Ein Unterschied zu den in FIG 5 dargestellten Synchronisiereinrichtungen SY1 und SY2 besteht jedoch darin, daß die in FIG 7 dargestellten Synchronisiereinrichtungen SY3 und SY4 keine individuelle Steuereinrichtung aufweisen. Vielmehr ist hier nach FIG 6 eine zentrale Steuereinrichtung C1 vorgesehen, die von ihrer Funktion und der Anschaltung an den jeweiligen Pufferspeicher und an die jeweilige Auswerteeinrichtung der zuvor anhand der FIG 3 erläuterten Steuereinrichtung C entspricht. D.h. von dieser Steuereinrichtung C1 werden nach Auftreten eines oben erwähnten Umsteuersignals die von den beiden Auswerteeinrichtungen R2 gelieferten, in OAM-Zellen enthaltenen Folgenummern ausgewertet, um anhand dieser Folgenummern den gerade voreilenden Nachrichtenzellenstrom zu verzögern, und zwar gegebenenfalls wieder graduell.

Nach FIG 6 ist die zentrale Steuereinrichtung C1 mit den Synchronisiereinrichtungen SY3 und SY4 über ein Leitungssystem verbunden. Dies kann beispielsweise als Ringleitungssystem oder als gedoppeltes Busleitungssystem mit Hin- und Rückrichtung ausgebildet sein. Bei letzterem kann die zentrale Steuereinrichtung C1 den bei einem solchen Busleitungssystem vorhandenen Kopfstationen zugehörig bzw. zugeordnet sein. Für die Kommunikation mit den Auswerteeinrichtungen A5 und A6 sowie die Steuerung der Pufferspeicher P5 und P6 können dabei beliebige Kommunikationsprotokolle benutzt werden. Als Beispiele seien hier das DQDB-Protokoll nach dem IEEE-Standard 802.6 sowie das CRMAII-Protokoll genannt.

Bezüglich der in der FIG 7 dargestellten Synchronisiereinrichtungen SY3 und SY4 sei darauf hingewiesen, daß an die diesen Synchronisiereinrichtungen jeweils zugehörige Datenweiche DW3 bzw. DW4 weitere, aus einem Pufferspeicher und einer nachgeschalteten Auswerteeinrichtung bestehende Schaltungselemente anschaltbar sind, um simultan eine Mehrzahl von virtuellen Pfaden auf zugeordnete Ersatzpfade umschalten zu können. Alternativ dazu kann der jeweilige Pufferspeicher P5 bzw. P6 auch als gemeinsamer Pufferspeicher für mehrere virtuelle Pfade ausgebildet sein, so daß auf die zugehörige Datenweiche DW3 bzw. DW4 verzichtet werden kann. Darüber hinaus kann an das Leitungssystem (Ringleitungssystem bzw. gedoppeltes Busleitungssystem) eine Vielzahl von Synchronisiereinrichtungen angeschlossen sein, die eingangsseitigen Schnittstelleneinrichtungen der Koppeleinrichtung CCb (FIG 6) zugehörig sind. Auf diese Weise kann durch die zentrale Steuereinrichtung C1 die Umleitung einer Vielzahl von Nachrichtenzellenströmen von einem aktiven Pfad auf einen Ersatzpfad gesteuert werden.

Abschließend sei noch darauf hingewiesen, daß das vorstehende Verfahren zur Umschaltung von virtuellen Pfaden auf Ersatzpfade auch derart modifiziert sein kann, daß von der Koppeleinrichtung CCa her ein zugeführter Nachrichtenzellenstrom durch Duplizieren ständig sowohl über einen aktiven Pfad als auch über einen zugeordneten Ersatzpfad übertragen wird und die daraus resultierenden beiden Nachrichtenzellenströme den zuvor erläuterten, in den FIGUREN 3, 5 und 7 dargestellten Synchronisiereinrichtungen zugeführt sind. In diesen erfolgt ständig eine oben erläuterte Synchronisierung, um bei Ausfall eines der Wege auf den verbleibenden Weg umzuschalten.

## Patentansprüche

1. Verfahren zum Umleiten eines in einem virtuellen Pfad bzw. im Zuge einer virtuellen Verbindung über einen aktiven Weg (AP) übertragenen Nachrichtenzellenstromes auf einen Ersatzweg (EP), der zusammen mit dem aktiven Weg ein virtuelles Wegepaar bildet, in einem zellenorientierten, eine Mehrzahl von Koppeleinrichtungen aufweisenden Kommunikationsnetz (ATMN), wobei der Nachrichtenzellenstrom in einer am Anfang des Wegepaares liegenden Koppeleinrichtung (CCa) dupliziert wird und die beiden daraus resultierenden Nachrichtenzellenströme gesondert über den aktiven Weg (AP) und über den Ersatzweg (EP) einer am Ende des Wegepaares liegenden Koppeleinrichtung (CCb) zugeführt werden,
und wobei die beiden über das Wegepaar übertragenen Nachrichtenzellenströme durch die am Ende des Wegepaares liegende Koppeleinrichtung derart überwacht werden, daß lediglich einer der beiden Nachrichtenzellenströme über eine dieser Koppeleinrichtung zugehörige ausgangsseitige Schnittstelleneinrichtung (T3) weitergeleitet wird,
**dadurch gekennzeichnet**,
daß die beiden Nachrichtenzellenströme einer der betreffenden Schnittstelleneinrichtung (T3) zugehörigen, dem genannten virtuellen Pfad bzw. der genannten virtuellen Verbindung zumindest temporär zugeordneten Synchronisiereinrichtung (SY) zugeführt werden,
daß durch die Synchronisiereinrichtung einerseits zunächst lediglich der über den aktiven Weg (AP) übertragene Nachrichtenzellenstrom weitergeleitet wird und andererseits die beiden Nachrichtenzellenströme synchronisiert werden,
und daß mit Erreichen einer solchen Synchronisierung anstelle des über den aktiven Weg (AP) zugeführten Nachrichtenzellenstromes nunmehr der über den Ersatzweg (EP) zugeführte Nachrichtenzellenstrom über die genannte Schnittstelleneinrichtung (T3) weitergeleitet wird.

2. Verfahren zum Umleiten eines in einem virtuellen Pfad bzw. im Zuge einer virtuellen Verbindung über einen aktiven Weg (AP) übertragenen Nachrichtenzellenstromes auf einen Ersatzweg (EP), der zusammen mit dem aktiven Weg ein virtuelles Wegepaar bildet, in einem zellenorientierten, eine Mehrzahl von Koppeleinrichtungen aufweisenden Kommunikationsnetz (ATMN), wobei der Nachrichtenzellenstrom in einer am Anfang des Wegepaares liegenden Koppeleinrichtung (CCa) dupliziert wird und die beiden daraus resultierenden Nachrichtenzellenströme gesondert über den aktiven Weg (AP) und über den Ersatzweg (EP) einer am Ende des Wegepaares liegenden Koppeleinrichtung (CCb) zugeführt werden,
und wobei die beiden über das Wegepaar übertragenen Nachrichtenzellenströme durch die am Ende des Wegepaares liegende Koppeleinrichtung derart überwacht werden, daß lediglich einer der beiden Nachrichtenzellenströme über eine dieser Koppeleinrichtung zugehörige ausgangsseitige Schnittstelleneinrichtung (T3) weitergeleitet wird,
**dadurch gekennzeichnet**,
daß jeder der beiden Nachrichtenzellenströme gesondert einer von zwei, dem betreffenden virtuellen Pfad bzw. der betreffenden virtuellen Verbindung zumindest temporär zugeordneten Synchronisiereinrichtungen (SY1, SY2 bzw. SY3, SY4) zugeführt wird, welche einer in dem aktiven Weg (AP) bzw. Ersatzweg (EP) liegenden eingangsseitigen Schnittstelleneinrichtung (R2, R3) der am Ende des Wegepaares liegenden Koppeleinrichtung (CCb) zugehörig sind,
daß die beiden Synchronisiereinrichtungen zunächst derart gesteuert sind, daß lediglich durch die in dem aktiven Weg (AP) liegende Synchronisiereinrichtung (SY2, SY4) der zugeführte Nachrichtenzellenstrom an die genannte ausgangsseitige Schnittstelleneinrichtung (T3) weitergeleitet wird, während der über den Ersatzweg zugeführte Nachrichtenzellenstrom durch die in diesem Ersatzweg liegende Synchronisiereinrichtung (SY1, SY3) unterdrückt wird,
daß die Nachrichtenzellenströme durch die beiden Synchronisiereinrichtungen synchronisiert werden
und daß mit Erreichen einer solchen Synchronisierung die beiden Synchronisiereinrichtungen derart gesteuert werden, daß anstelle des über den aktiven Weg (AP) zugeführten Nachrichtenzellenstromes nunmehr der über den Ersatzweg (EP) zugeführte Nachrichtenzellenstrom über die genannte Schnittstelleneinrichtung (T3) weitergeleitet wird.

3. Verfahren nach Anspruch 1 oder 2,
**dadurch gekennzeichnet**,
daß die Duplizierung des Nachrichtenzellenstromes in der am Anfang des Wegepaares liegenden Koppeleinrichtung (CCa) erst auf ein Anforderungssignal hin durchgeführt wird.

4. Verfahren nach Anspruch 3,
**dadurch gekennzeichnet**,
daß der Ersatzweg (EP) erst auf das Anforderungssignal hin festgelegt und eingerichtet wird.

5. Verfahren nach Anspruch 3,
**dadurch gekennzeichnet**,
daß der Ersatzweg (EP) und die dafür erforderliche Übertragungskapazität bereits zusammen mit dem aktiven Weg (AP) festgelegt wird, die Übertragung des Nachrichtenzellenstromes jedoch bis zum Auftreten des Anforderungssignales ausschließlich über den aktiven Weg (AP) erfolgt.

6. Verfahren nach Anspruch 3,
**dadurch gekennzeichnet**,
daß zusammen mit dem aktiven Weg (AP) lediglich der Verlauf des Ersatzweges (EP) festgelegt wird, die für diesen Ersatzweg benötigte Übertragungskapazität jedoch erst auf das Anforderungssignal hin angefordert wird.

7. Verfahren nach Anspruch 5 oder 6,
**dadurch gekennzeichnet**,
daß die für den Ersatzweg (EP) benötigte Übertragungskapazität bis zum Auftreten des Anforderungssignals für niederprioren Nachrichtenverkehr benutzt wird.

8. Verfahren nach einem der Ansprüche 1 bis 7,
**dadurch gekennzeichnet**,
daß in die beiden der Synchronisiereinrichtung (SY) bzw. den Synchronisiereinrichtungen (SY1, SY2 bzw. SY3, SY4) zugeführten Nachrichtenzellenströme jeweils in festgelegten Zeitabständen jeweils eine Steuerzelle eingefügt wird, daß in den Steuerzellen jeweils eine von Steuerzelle zu Steuerzelle sich fortlaufend verändernde Folgenummer enthalten ist
und daß durch die Synchronisiereinrichtung (SY) bzw. die Synchronisiereinrichtungen (SY1, SY2 bzw. SY3, SY4) nach Maßgabe der in den Steuerzellen der beiden Nachrichtenzellenströme auftretenden Folgenummern eine Synchronisierung der beiden Nachrichtenzellenströme hinsichtlich des Ausgleiches der durch den aktiven Weg (AP) und Ersatzweg (EP) bedingten Laufzeitunterschiede vorgenommen wird.

9. Verfahren nach Anspruch 8,
**dadurch gekennzeichnet**,
daß durch die Synchronisiereinrichtung (SY) bzw. die Synchronisiereinrichtungen (SY1, SY2 bzw. SY3, SY4) der Ausgleich der Laufzeitunterschiede schrittweise durchgeführt wird.

10. Schaltungsanordnung zum Umleiten eines in einem virtuellen Pfad bzw. im Zuge einer virtuellen Verbindung über einen aktiven Weg (AP) übertragenen Nachrichtenzellenstromes auf einen Ersatzweg (EP), der zusammen mit dem aktiven Weg ein virtuelles Wegepaar bildet, in einem zellenorientierten, eine Mehrzahl von Koppeleinrichtungen aufweisenden Kommunikationsnetz (ATMN),
wobei der Nachrichtenzellenstrom in einer am Anfang des Wegepaares liegenden Koppeleinrichtung (CCa) dupliziert wird und die beiden daraus resultierenden Nachrichtenzellenströme gesondert über den aktiven Weg (AP) und über den Ersatzweg (EP) einer am Ende des Wegepaares liegenden Koppeleinrichtung (CCb) zugeführt werden,
und wobei die beiden über das Wegepaar übertragenen Nachrichtenzellenströme durch die am Ende des Wegepaares liegende Koppeleinrichtung derart überwacht werden, daß lediglich einer der beiden Nachrichtenzellenströme über eine dieser Koppeleinrichtung zugehörige ausgangsseitige Schnittstelleneinrichtung (T3) weitergeleitet wird,
**dadurch gekennzeichnet**,
daß die beiden Nachrichtenzellenströme einer der betreffenden Schnittstelleneinrichtung (T3) zugehörigen, dem genannten virtuellen Pfad bzw. der genannten virtuellen Verbindung zumindest temporär zugeordneten Synchronisiereinrichtung (SY) zugeführt sind, welche derart ausgebildet ist,
daß einerseits zunächst lediglich der über den aktiven Weg (AP) übertragene Nachrichtenzellenstrom weitergeleitet wird und andererseits die beiden Nachrichtenzellenströme synchronisiert werden,
und daß mit Erreichen einer solchen Synchronisierung anstelle des über den aktiven Weg (AP) zugeführten Nachrichtenzellenstromes nunmehr der über den Ersatzweg (EP) zugeführte Nachrichtenzellenstrom über die genannte Schnittstelleneinrichtung (T3) weitergeleitet wird.

11. Schaltungsanordnung zum Umleiten eines in einem virtuellen Pfad bzw. im Zuge einer virtuellen Verbindung über einen aktiven Weg (AP) übertragenen Nachrichtenzellenstromes auf einen Ersatzweg (EP), der zusammen mit dem aktiven Weg ein virtuelles Wegepaar bildet, in einem zellenorientierten, eine Mehrzahl von Koppeleinrichtungen aufweisenden Kommunikationsnetz (ATMN),
wobei der Nachrichtenzellenstrom in einer am Anfang des Wegepaares liegenden Koppeleinrichtung (CCa) dupliziert wird und die beiden daraus resultierenden Nachrichtenzellenströme gesondert über den aktiven Weg (AP) und über den Ersatzweg (EP) einer am Ende des Wegepaares liegenden Koppeleinrichtung (CCb) zugeführt werden,
und wobei die beiden über das Wegepaar übertragenen Nachrichtenzellenströme durch die am Ende des Wegepaares liegende Koppeleinrichtung derart überwacht werden, daß lediglich einer der beiden Nachrichtenzellenströme über eine dieser Koppeleinrichtung zugehörige ausgangsseitige Schnittstelleneinrichtung (T3) weitergeleitet wird,
**dadurch gekennzeichnet**,
daß jeder der beiden Nachrichtenzellenströme gesondert einer von zwei, dem betreffenden virtuellen Pfad bzw. der betreffenden virtuellen Verbindung zumindest temporär zugeordneten Synchronisiereinrichtungen (SY1, SY2 bzw. SY3, SY4) zugeführt wird, welche einer in dem aktiven Weg (AP) bzw. Ersatzweg (EP) liegenden eingangsseitigen Schnittstelleneinrichtung (R2, R3) der am Ende des Wegepaares liegenden Koppeleinrichtung (CCb) zugehörig sind, und welche derart miteinander gekoppelt und ausgebildet sind,
daß zunächst lediglich durch die in dem aktiven Weg (AP) liegende Synchronisiereinrichtung (SY2, SY4) der zugeführte Nachrichtenzellenstrom an die genannte ausgangsseitige Schnittstelleneinrichtung (T3) weitergeleitet wird, während der über den Ersatzweg zugeführte Nachrichtenzellenstrom durch die in diesem Ersatzweg liegende Synchronisiereinrichtung (SY1, SY3) unterdrückt wird,
daß die Nachrichtenzellenströme durch die beiden Synchronisiereinrichtungen synchronisiert werden
und daß mit Erreichen einer solchen Synchronisierung anstelle des über den aktiven Weg (AP) zugeführten Nachrichtenzellenstromes nunmehr der über den Ersatzweg (EP) zugeführte Nachrichtenzellenstrom über die genannte Schnittstelleneinrichtung (T3) weitergeleitet wird.

12. Schaltungsanordnung nach Anspruch 10,
**dadurch gekennzeichnet**,
daß die jeweilige Synchronisiereinrichtung (SY) erste Speichermittel (P1) für die Aufnahme des über den aktiven Weg (AP) übertragenen Nachrichtenzellenstromes sowie zweite Speichermittel (P2) für die Aufnahme des über den Ersatzweg (EP) übertragenen Nachrichtenzellenstromes aufweist,
daß den ersten und zweiten Speichermitteln (P1, P2) jeweils von dem jeweiligen Nachrichtenzellenstrom durchlaufene Auswertemittel (A1 bzw. A2) nachgeschaltet sind, welche ausgangsseitig an Schaltmittel (S) angeschlossen sind und durch welche jeweils das Auftreten von Steuerzellen in dem jeweiligen Nachrichtenzellenstrom überwacht ist und in den Steuerzellen enthaltene Folgenummern einer Steuereinrichtung (C) zugeführt sind,
und daß die Steuereinrichtung (C) derart ausgebildet und mit den ersten und zweiten Speichermitteln (P1, P2) sowie den Schaltmitteln (S) verbunden ist, daß zunächst lediglich der über den aktiven Weg (AP) übertragene Nachrichtenzellenstrom über die Schaltmittel weitergeleitet wird, daß nach Maßnahme der in den beiden Nachrichtenzellenströmen auftretenden Folgenummern der voreilende Nachrichtenzellenstrom ermittelt wird, daß für eine Synchronisierung der beiden Nachrichtenzellenströme der voreilende Nachrichtenzellenstrom in den ersten bzw. zweiten Speichermitteln (P1, P2) verzögert wird, bis in dem nacheilenden Nachrichtenzellenstrom eine Folgenummer auftritt, die der für den voreilenden Nachrichtenzellenstrom ermittelten Folgenummer entspricht, und daß nach Erreichen der Synchronisierung lediglich noch der über den Ersatzweg (EP) eintreffende Nachrichtenzellenstrom über die Schaltmittel (S) weitergeleitet wird.

13. Schaltungsanordnung nach Anspruch 11,
**dadurch gekennzeichnet**,
daß jede der beiden Synchronisiereinrichtungen (SY1 bzw. SY2) Speichermittel (P3 bzw. P4) für die Aufnahme des über den aktiven Weg (AP) bzw. Ersatzweg (EP) übertragenen Nachrichtenzellenstromes aufweist,
daß den Speichermitteln (P3 bzw. P4) von dem jeweiligen Nachrichtenzellenstrom durchlaufene Auswertemittel (A3 bzw. A4) nachgeschaltet sind, durch welche das Auftreten von Steuerzellen in dem jeweiligen Nachrichtenzellenstrom überwacht ist und in den Steuerzellen enthaltene Folgenummern einer Steuereinrichtung (MC bzw. SC) zugeführt sind,
und daß die Steuereinrichtungen (MC bzw. SC) der beiden Synchronisiereinrichtungen (SY1 und SY2) derart ausgebildet und mit den zugehörigen Speichermitteln (P3 bzw. P4) sowie miteinander verbunden sind, daß zunächst unter der Steuerung einer der beiden, als "Master"-Steuereinrichtung (MC) fungierenden Steuereinrichtungen lediglich der über den aktiven Weg (AP) übertragene Nachrichtenzellenstrom an die genannte ausgangsseitige Schnittstelleneinrichtung (T3) weitergeleitet wird, daß durch die "Master"-Steuereinrichtung (MC) nach Maßgabe der dieser von den zugehörigen Auswertemitteln (A4) und der verbleibenden, als "Slave"-Steuereinrichtung fungierenden Steuereinrichtung (SC) her zugeführten Folgenummern der voreilende Nachrichtenzellenstrom ermittelt wird, daß für eine Synchronisierung der über den aktiven Weg (AP) und den Ersatzweg (EP) übertragenen Nachrichtenzellenströme unter der Steuerung der "Master"-Steuereinrichtung (MC) der voreilende Nachrichtenzellenstrom durch direkte Steuerung der dieser "Master"-Steuereinrichtung zugeordneten Speichermittel (P4) bzw. durch indirekte Steuerung der der "Slave"-Steuereinrichtung (SC) zugeordneten Speichermittel (P3) verzögert wird, bis in dem nacheilenden Nachrichtenzellenstrom eine Folgenummer auftritt, die der für den voreilenden Nachrichtenzellenstrom ermittelten Folgenummer entspricht, und daß nach Erreichen der Synchronisierung unter der Steuerung der "Master"-Steuereinrichtung (MC) lediglich noch der über den Ersatzweg (EP) eintreffende Nachrichtenzellenstrom an die genannte ausgangsseitige Schnittstelleneinrichtung (T3) weitergeleitet wird.

14. Schaltungsanordnung nach Anspruch 11,
**dadurch gekennzeichnet**,
daß jede der beiden Synchronisiereinrichtungen (SY3 bzw. SY4) Speichermittel (P5 bzw. P6) für die Aufnahme des über den aktiven Weg (AP) bzw. Ersatzweg (EP) übertragenen Nachrichtenzellenstromes aufweist,
daß den Speichermitteln von dem jeweiligen Nachrichtenzellenstrom durchlaufene Auswertemittel (A5 bzw. A6) nachgeschaltet sind, durch welche das Auftreten von Steuerzellen in dem jeweiligen Nachrichtenzellenstrom überwacht ist und in den Steuerzellen enthaltene Folgenummern einer den beiden Synchronisiereinrichtungen (SY1 und SY2) gemeinsam zugeordneten zentralen Steuereinrichtung (C1) zugeführt sind,
und daß die zentrale Steuereinrichtung (C1) derart ausgebildet und mit den Speichermitteln (P5, P6) sowie den Auswertemitteln (A5, A6) der beiden Synchronisiereinrichtungen (SY3, SY4) verbunden ist, daß zunächst lediglich der über den aktiven Weg (AP) übertragene Nachrichtenzellenstrom an die genannte ausgangsseitige Schnittstelleneinrichtung (T3) weitergeleitet wird, daß nach Maßgabe der in den beiden, über den aktiven Weg (AP) und den Ersatzweg (EP) übertragenen Nachrichtenzellenströmen auftretenden Folgenummern der voreilende Nachrichtenzellenstrom ermittelt wird, daß für eine Synchronisierung der beiden Nachrichtenzellenströme der voreilende Nachrichtenzellenstrom in dem jeweiligen Speichermittel (P5 bzw. P6) verzögert wird, bis in dem nacheilenden Nachrichtenzellenstrom eine Folgenummer auftritt, die der für den voreilenden Nachrichtenzellenstrom ermittelten Folgenummer entspricht, und daß nach Erreichen der Synchronisierung lediglich noch der über den Ersatzweg (EP) eintreffende Nachrichtenzellenstrom über die genannte ausgangsseitige Schnittstelleneinrichtung (T3) weitergeleitet wird.

15. Schaltungsanordnung nach Anspruch 14,
**dadurch gekennzeichnet**,
daß die zentrale Steuereinrichtung (C1) mit den Speichermitteln (P5, P6) und den Auswertemitteln (A5, A6) der beiden Synchronisiereinrichtungen (SY3, SY4) über ein Busleitungssystem verbunden ist.

16. Schaltungsanordnung nach Anspruch 14,
**dadurch gekennzeichnet**,
daß die zentrale Steuereinrichtung (C1) mit den Speichermitteln (P5, P6) und den Auswertemitteln (A5, A6) der beiden Synchronisiereinrichtungen (SY3, SY4) über ein Ringleitungssystem verbunden ist.
